# FASCICULE DE BREVET EUROPEEN

(11) **EP 0 924 600 B1**
(45) Date de publication et mention de la délivrance du brevet: **26.03.2003**
(21) Numéro de dépôt: 98204159.2
(22) Date de dépôt: 08.12.1998
(51) Int. Cl.: G06F 7/58, G06F 12/14

(54) **Appareil électronique comportant un dispositif de protection pour une mémoire et procédé pour protéger des données dans une mémoire**
Elektronische Vorrichtung mit einem Speicherschutzgerät und Verfahren zum Datenschuts in einem Speicher
Electronic apparatus comprising a memory protection device and a method for protecting data in a memory

(30) Priorité: 15.12.1997 FR 9715879
(43) Date de publication de la demande: 23.06.1999
(73) Titulaire: Koninklijke Philips Electronics N.V., 5621 BA Eindhoven (NL)
(72) Inventeur: Charron, Didier, Société Civile S.P.I.D., 75008 Paris (FR)
(74) Mandataire: Chaffraix, Jean

(56) Documents cités:
- WO-A-97/07463
- US-A- 4 757 468
- US-A- 4 853 884

## Description

La présente invention concerne un appareil électronique comportant un dispositif de protection pour des données emmagasinées dans une mémoire, dispositif comportant des moyens pour fournir une information de caractérisation.

L'invention concerne aussi un procédé pour protéger des données.

L'invention trouve des applications importantes dans le domaine des radiotéléphones portables répondant aux normes du genre AMPS et autres. Ces appareils sont munis de mémoires pouvant comporter des données cruciales, par exemple : des données concernant le numéro de série qui permet de déterminer l'appelant et de le facturer, ou des données concernant un compte de prépaiement pour des conversations radiotéléphoniques. Ces données et donc la mémoire doivent être protégées pour éviter des copies inopinées de la part de personnes mal intentionnées, voire pour éviter carrément le vol de ladite mémoire.

Il est connu du brevet des Etats-Unis US-A-4 727 544 un appareil muni d'un tel dispositif. Cet appareil est destiné à des jeux électroniques. Selon ce brevet, on prévoit un codage des mémoires mortes qui comportent des données cruciales. Ce codage permet de détecter tout viol ou copie de ladite mémoire. Ce codage, qui détermine l'information de caractérisation, consiste à déterminer un code de vérification basé sur le contenu de la mémoire à protéger. Ce code de verification est stocké dans le dispositif de protection et, à la mise en route du circuit dans lequel la mémoire est disposée, on recalcule le code de vérification. Le nouveau code est comparé au code stocké. Si une divergence est décelée, on estime qu'il y a eu une modification de la mémoire et le circuit est alors bloqué.

Le dispositif du brevet précité peut être considéré dans certaines applications comme étant d'une mise en service impliquant des traitements qui sollicitent trop le processeur dudit dispositif qui, bien souvent, a aussi des tâches à effectuer dans l'appareil qui contient un tel dispositif.

Le dispositif selon US 4757468, une valeur initiale (appelée "seed value") et une clé sont initialement stockées. Lors d'une utilisation de la mémoire, ces 2 nombres sont utilisés pour permettre d'une part la génération d'un nombre aléatoire et d'autre part le cryptage de l'identificateur de la mémoire dans le dispositif lui même. Le nombre aléatoire est transmis au système qui désire accéder à la mémoire et va être crypter dans le système pour ensuite être comparé avec celui qui a été crypté par la mémoire. Le résultat de la comparaison permettra ou non l'accès à la mémoire.

Un premier aspect de l'invention propose un appareil tel que défini dans la revendication indépendante 1 qui est d'une mise en service particulièrement simple, tout en offrant une garantie suffisante contre les copies frauduleuses.

Pour cela, un tel dispositif comporte
- un générateur de nombre aléatoire qui fournit un nombre lié à l'appareil qui contient le dispositif, pour former ladite information de caractérisation,
- des moyens pour emmagasiner dans ladite mémoire ledit nombre aléatoire à une première mise en service dudit dispositif et
- un dispositif de comparaison pour comparer le nombre fourni par ledit générateur avec le nombre emmagasiné à ladite première mise en service, en vue de bloquer l'appareil en cas de divergence.

L'idée de l'invention repose sur le fait que la mémoire copiée ou dérobée ne peut plus fonctionner dans un autre appareil, puisque le générateur fournit un nombre qui, pratiquement, est propre à l'appareil contenant ledit dispositif.

Il est à noter une variante de réalisation, selon laquelle ledit générateur est constitué par :
- un diviseur de tension formé de résistances présentant des valeurs de tolérances d'une certaine importance,
- un convertisseur analogique-numérique pour transformer en grandeur numérique la tension du diviseur de tension,
- des premiers moyens de traitement pour fournir ladite information de caratérisation lors d'une première mise en service, à partir de ladite grandeur numérique,
- des deuxièmes moyens de traitement pour comparer ladite information de caractérisation à celle fournie à partir dudit générateur, après ladite première mise en service.

Cette variante de réalisation amène l'avantage important au'un tel générateur est d'un coût minime et réalise très bien la fonction de générateur de grandeur aléatoire. On est ainsi à peu près sûr qu'il fournit une valeur différente d'un appareil à l'autre, ce qui caractérise donc bien l'appareil dans lequel il est inséré. En outre, le convertisseur analogique-numérique qui convertit cette valeur est souvent disponible dans les circuits contrôleurs faisant partie de bien des appareils électroniques et ne crée donc pas de frais supplémentaires.

Il faut noter encore que l'utilsation d'un diviseur potentiométrique pour engendrer une information de caractérisation d'un appareil est décrite dans le brevet des Etats-Unis No. 4 623 976. Cependant, cette grandeur n'est pas utilisée à des fins de protection de données capitales. En outre pour engendrer cette grandeur carctéristique, on ne profite pas des écarts de valeurs que présentent les résistances du commerce.

Un deuxième aspect de l'invention propose une méthode telle que définie dans la revendication 3.

La description suivante faite en regard des dessins ci-annexés, le tout donné à titre d'exemple non limitatif, fera bien comprendre comment l'invention peut être réalisée.
La figure 1 montre un dispositif conforme à l'invention.
La figure 2 montre un exemple d'implémentation de données cruciales dans la mémoire à protéger.
La figure 3 montre un organigramme explicitant la mise en mémoire de l'information de caractérisation.
La figure 4 montre un organigramme explicitant la vérification de la mémoire lors de l'utilisation normale de l'appareil.

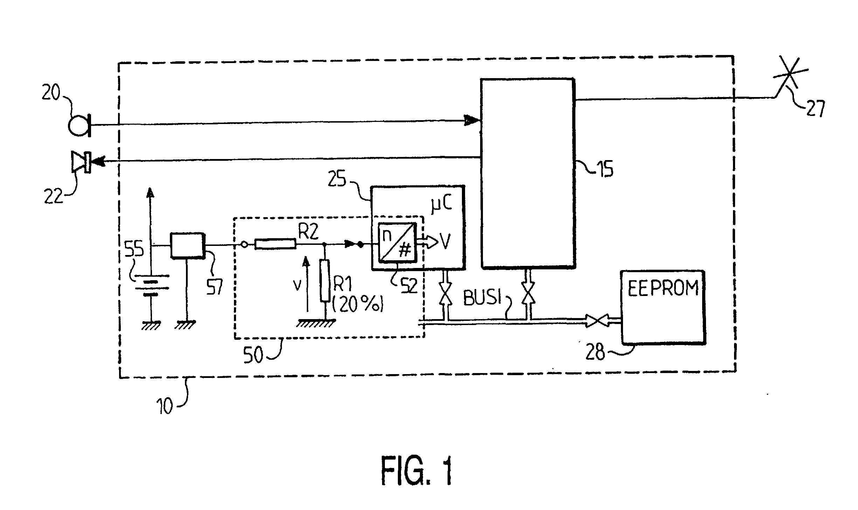

La figure 1 montre schématiquement un appareil électronique 10 et plus précisément un poste téléphonique radiomobile utilisé dans des réseaux cellulaires tels que ceux définis par les normes AMPS ou similaires. Cet appareil comporte un circuit électronique 15 qu'il n'y a pas lieu de détailler car ne faisant pas partie de l'invention. Ce circuit reçoit des signaux de parole provenant d'un microphone 20 et fournit aussi des signaux de paroles à un écouteur 22. Cet appareil communique par voie radioélectrique en utilisant une antenne 27. Ce circuit est contrôlé par un ensemble à microcontrôleur 25 qui, en outre, traite les informations à enregistrer et à lire dans la mémoire EEPROM 28 qui contient des données cruciales à protéger. Les relations entre les différents éléments précités 25, 15 et 28 s'effectuent par une ligne commune BUSI de type I2C.

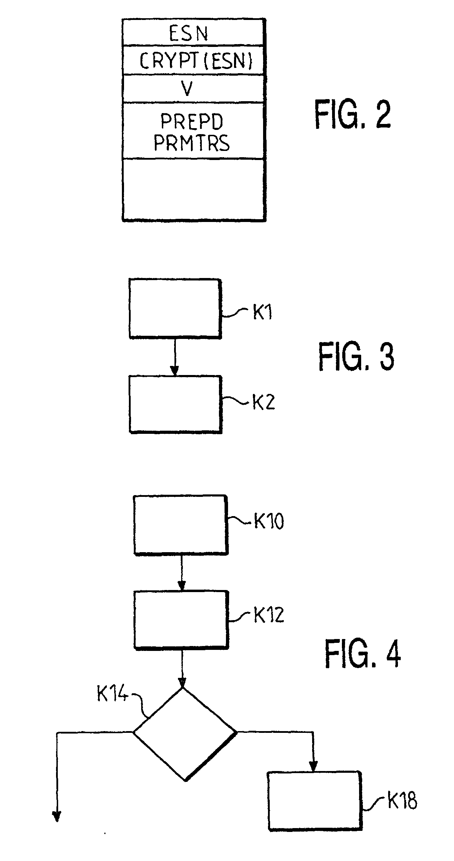

La figure 2 montre un exemple d'implémentation, dans la mémoire EEPROM 28, de données importantes à protéger. Ainsi on trouve la donnée ESN qui est le numéro de série propre à l'appareil, la donnée CRYPT(ESN) qui est cette même donnée mais sous forme cryptée, cette fois, et la donnéee PREPDPRMTRS qui sont des donnnées définissant le prépaiement donnant, entre autres, le nombre et la durée de communications qu'il est possible d'effectuer et d'utiliser.

Conformément à l'invention, on établit une information de caractérisation de l'appareil et différente de la donnée ESN au moyen d'un génerateur 50 (représenté figure 1). Ce générateur 50 fournit une valeur V qui est aussi emmagasinée dans la mémoire 28.

L'appareil est mis à profit si tous les appareils qui peuvent contenir un dispositif de protection tel que décrit par l'invention, on compare la valeur fournie localement par le générateur avec la valeur enregistrée dans la mémoire 28. Si les valeurs sont égales, on déclare que la mémoire 28 est bien authentique et est donc bien appairée avec son appareil. Sinon, on déclare qu'il y a fraude et on inhibe le fonctionnement de l'appareil. Ainsi, grâce à l'invention, on aura singulièrement compliqué la tâche du copieur d'EEPROM qui voudrait insérer des mémoire copiées dans des appareils conformes à l'invention.

Selon un mode de réalisation préféré de l'invention, le générateur 50 est formé de deux résistances R1 et R2 montées en diviseur de tension potentiométrique, comme montré figure 1. Ces résistances doivent donc avoir des valeurs différentes pour chacun des appareils qui sont fabriqués. Pour cela, on peut profiter de la tolérance des valeurs des résistances offertes par le marché, par exemple des résistances de 20 %, ou bien alors on peut prendre différentes résistances, les mélanger avant la fabrication de sorte que les résistances montées au cours de la fabrication auront des valeurs distribuées au hasard. La tension "v" de valeur aléatoire ainsi élaborée est mise sous forme numérique par un convertisseur analogique-numérique 52. On notera que ce convertisseur est contenu dans l'ensemble à micro-contrôleur 25. Par exemple, le micro-contrôleur 83C145 fabriqué par Philips contient un tel convertisseur, de sorte que la mise en oeuvre de l'invention est d'un coût très réduit. La tension d'attaque provient, par exemple, de l'accumulateur 55 de l'appareil suivi de préférence d'un régulateur de tension 57.

La figure 3 montre un organigramme explicitant le fonctionnement de l'appareil, lors de la première mise en route. La case K1 explicite la mesure de la tension par le convertisseur analogique-numérique 52 et la case K2 l'enregistrement de cette valeur numérique dans un emplacement de la mémoire 28.

La figure 4 montre le fonctionnement lors de la mise en route habituelle déclenchée par l'utilisateur. La première tâche effectuée, indiquée par la case K10, consiste à déterminer la valeur numérique fournie par le générateur 50, puis on prélève la valeur enregistrée dans la mémoire 28 (case K12). Ces deux valeurs sont comparées, ce qui est indiqué à la case K14. Si les valeurs sont différentes, on va à la case K18 qui stoppe le processus de mise en route et affiche sur l'écran un message du genre "ERREUR". Si les valeurs sont identiques, l'utilisateur ne s'aperçoit de rien et son appareil fonctionne comme il le devrait.

## Revendications

1. Appareil électronique (10) comportant un dispositif de protection (50) pour des données emmagasinées dans une mémoire (28), dispositif comportant des moyens pour fournir une information de caractérisation, ledit dispositif comportant un générateur de nombre aléatoire, **caractérise en ce que** ledit générateur de nombre aléatoire (50) fournit un nombre lié à l'appareil qui contient le dispositif, pour former ladite information de caractérisation (V) et **en ce que** ledit dispositif comporte :
- des moyens pour emmagasiner dans ladite mémoire (28) ledit nombre aléatoire à une première mise en service dudit dispositif et
- un dispositif de comparaison (K14) pour comparer le nombre fourni par ledit générateur lors des mises en routes habituelles de l'appareil avec le nombre emmagasiné à ladite première mise en service, en vue de bloquer l'appareil en cas de divergence.

2. Appareil électronique selon la revendication 1, **caractérisé en ce que** ledit générateur est constitué par :
- un diviseur de tension (R1, R2) formé de résistances présentant des valeurs de tolérances d'une certaine importance,
- un convertisseur analogique-numérique (52) pour transformer en grandeur numérique la tension du diviseur de tension,
- des premiers moyens de traitement pour fournir ladite information de caratérisation lors d'une première mise en service, à partir de ladite grandeur numérique,
- des deuxièmes moyens de traitement pour comparer ladite information de caractérisation à celle fournie à partir dudit générateur, après ladite première mise en service.

3. Procédé de protection mis en oeuvre dans un appareil selon l'une des revendications 1 à 2, **caractérisé en ce qu'**il comporte les étapes suivantes :
- affectation (K1, K10) d'une information de caractérisation de l'appareil, élaborée par un générateur de nombre aléatoire (50),
- enregistrement (K2) à une première mise en route de l'appareil de l'information de caractérisation,
- comparaison (K14) lors de l'utilisation, lors des mises en route habituelles de l'appareil, des informations de caractérisation fournies par le générateur de nombre aléatoire et de l'information de caractérisation contenue dans la mémoire à protéger,
- blocage de l'appareil si les deux inforations sont différentes.

## Patentansprüche

1. Elektronische Vorrichtung (10) mit einem Gerät zum Schutz (50) der in einem Speicher (28) abgelegten Daten, wobei das Gerät Verfahren aufweist, um eine Kennzeichnungsinformation abzugeben, wobei das besagte Gerät einen Generator einer Zufallszahl enthält, **dadurch gekennzeichnet, dass** der besagte Generator einer Zufallszahl (50) eine mit der Vorrichtung, die das Gerät enthält, verbundene Zahl liefert, um die besagte Kennzeichnungsinformation (V) zu liefern, und dass das besagte Gerät enthält:
- Verfahren zum Ablegen in dem besagten Speicher (28) der besagten Zufallszahl bei einer ersten Inbetriebnahme des besagten Geräts, und
- ein Vergleichsgerät (K14) zum Vergleichen der von dem Generator bei der üblichen Inbetriebnahme der Vorrichtung gelieferten Zahl mit der bei der besagten ersten Inbetriebnahme gespeicherten Zahl, um die Vorrichtung im Falle einer Abweichung zu sperren.

2. Elektronische Vorrichtung nach Anspruch 1, **dadurch gekennzeichnet, dass** der besagte Generator gebildet wird aus
- einem aus Widerständen gebildeten Spannungsteiler (R1, R2), der Toleranzwerte einer gewissen Bedeutung aufweist,
- einem Analog-Digital-Umsetzer (52), um die Spannung des Spannungsteilers in einen digitalen Wert umzuwandeln,
- erste Verarbeitungsverfahren, um die besagte Kennzeichnungsinformation bei der ersten Inbetriebnahme anhand des besagten digitalen Werts zu liefern,
- zweite Verarbeitungsverfahren, um die besagte Kennzeichnungsinformation mit der anhand des besagten Generators nach der besagten ersten Inbetriebnahme zu vergleichen.

3. In einer Vorrichtung nach den Ansprüchen 1 bis 2 umgesetztes Schutzverfahren, **dadurch gekennzeichnet, dass** es folgende Schritte umfasst:
- Zuteilung (K1, K10) einer Kennzeichnungsinformation der Vorrichtung, erzeugt von einem Generator einer Zufallszahl (50),
- Aufzeichnung (K2) der Kennzeichnungsinformation bei einer ersten Inbetriebnahme der Vorrichtung,
- Vergleich (K14) während der Anwendung bei der normalen Inbetriebnahme der Vorrichtung der vom Generator der Zufallszahl erzeugten Kennzeichnungsinformation mit der in dem zu schützenden Speicher enthaltenen Kennzeichnungsinformation,
- Sperren der Anwendung, wenn die beiden Informationen unterschiedlich sind.

## Claims

1. An electronic apparatus (10) comprising a protection device (50) for data stored in a memory (28), the device including means for producing a personality data, said device comprising a random number generator, **characterized in that** said random number generator (50) produces a number linked with the apparatus containing the device, for forming said personality data and **in that** said device comprises:
- means for storing said random number in said memory (28) when said device is switched on for a first time and
- a comparing device (K14) for comparing the number produced by said generator during customary runs of the apparatus with the number stored on said first switch-on, so as to block the apparatus in the event of divergence.

2. An electronic apparatus as claimed in claim 1, **characterized in that** said generator is formed by:
- a voltage divider (R1, R2) formed by resistors which have tolerance values of a certain magnitude,
- an analog-to-digital converter (52) for converting the voltage of the voltage divider into a digital magnitude,
- first processing means for producing said personality data when the means are switched on for a first time based on said digital magnitude,
- second processing means for comparing said personality data with that produced by said generator, after said first switch-on.

3. A protection method implemented in an apparatus as claimed in one of the claims 1 to 2, **characterized in that** it comprises the following steps:
- assigning (K1, K10) a personality data of the apparatus, produced by a random number generator (50),
- recording (K2) the personality data when the apparatus is used for a first time,
- comparing (K14) during operation, during normal runs of the apparatus, personality data produced by the random number generator and the personality data contained in the memory to be protected,
- blocking the apparatus if the two data are different.
